# EUROPÄISCHE PATENTSCHRIFT

(11) **EP 1 146 274 B1**
(45) Veröffentlichungstag und Bekanntmachung des Hinweises auf die Patenterteilung: **30.06.2004**
(21) Anmeldenummer: 01108858.0
(22) Anmeldetag: 09.04.2001
(51) Int. Cl.: F16L 23/00

(54) **Flanschsystem mit Korrosionsschutz**
Corrosion protected flanged joint system
Système de joint à brides avec protection contre la corrosion

(30) Priorität: 12.04.2000 DE 20006750 U
(43) Veröffentlichungstag der Anmeldung: 17.10.2001
(73) Patentinhaber: August Friedberg GmbH, 45884 Gelsenkirchen (DE); Siegthalerfabrik GmbH, 57080 Siegen (DE)
(72) Erfinder: Wolf, Dietmar A., 57234 Wilnsdorf (DE); Hasselmann, Uwe, Dr., 45130 Essen (DE)
(74) Vertreter: GROSSE BOCKHORNI SCHUMACHER

(56) Entgegenhaltungen:
- DE-B- 1 236 876
- US-A- 2 868 188
- US-A- 3 190 334
- US-A- 5 746 242
- PATENT ABSTRACTS OF JAPAN vol. 1999, no. 13, 30. November 1999 (1999-11-30) -& JP 11 218277 A (KANEDA KOZAI KK), 10. August 1999 (1999-08-10)

## Beschreibung

Die Erfindung betrifft ein Flanschsystem gemäß dem Oberbegriff des Schutzanspruchs 1, wie es beispielsweise die Schrift JP11218277A zeigt.

Insbesondere beim Bau von Antennen, Schornsteinen oder Windenergieanlagen werden vielfach Ringflanschverbindungen mit hochfesten, teilweise korrosionsgeschützten Schrauben eingesetzt. Je nach der Lage von derartigen Konstruktionen besteht jedoch die Gefahr, und zwar abhängig von den Umgebungsbedingungen wie hohe Luftfeuchtigkeit oder ausgeprägte Temperaturwechsel, daß Schwitzwasser in den Flanschbohrungen der eingesetzten Schraubenbolzen entsteht. Dieses Schwitzwasser kann sich in den Flanschbohrungen ansammeln, was zu einer Korrosion der angrenzenden Stahlteile und der Schraubenbolzen führt. Insbesondere kann das angesammelte Schwitzwasser dazu führen, daß sich z. B. bei der Verwendung von verzinkten Schraubenbolzen die Passivschicht von deren Zinkoberfläche im benetzten Bereich nicht so gut ausbildet, wie bei einem ungehinderten Zutritt von Luftsauerstoff. Die Folge davon ist eine verstärkte Korrosion des Schraubenbolzens und eventuell auch der Innenfläche der Flanschbohrungen für die Aufnahme der Schraubenbolzen.

Aufgabe der vorliegenden Erfindung ist es daher, mit einfachen Mitteln ein korrosionsgeschützes Flanschsystem zu schaffen, das sich sowohl für eine Nachrüstung bei bestehender Konstruktionen als auch für den Serieneinsatz bestens eignet.

Diese Aufgabe wird erfindungsgemäß in einfacher Weise durch die im kennzeichnenden Teil des Schutzanspruchs 1 enthaltenden Merkmale gelöst, wobei zweckmäßige Weiterbildungen durch die Merkmale der jeweiligen Unteransprüche gekennzeichnet sind.

Durch das erfindungsgemäße Merkmal des kennzeichnenden Teils des Schutzanspruchs 1, in der dem Schraubenbolzenkopf und/oder der Mutter des Schraubenbolzens zugewandten Flanschstirnfläche einerseits und/oder in einer oder beiden Stirnseiten der Unterlegscheiben andererseits mindestens ein Nut vorzusehen, wird auf baulich einfache Weise erreicht, daß dadurch die Flanschbohrung selbsttätig und zuverlässig entlüftet bzw. entwässert werden kann und somit im wesentlichen trocken bleibt. Dabei ist es zweckmäßig, daß die in der jeweiligen Flanschstirnfläche vorgesehene Nut ausgehend von der Flanschbohrung bis zum Flanschrand verläuft.

Insbesondere bei ringförmigen Flanschsystemen mit einer Vielzahl konzentrisch auf dem Ringflansch angeordneten Flanschbohrungen ist es zweckmäßig, daß jede Flanschbohrung mindestens eine Nut aufweist, die radial zum Flanschrand verläuft, wobei es auch vorteilhaft möglich sein kann, daß die in der jeweiligen Flanschstirnfläche vorgesehene Nut als Ringnut ausgebildet ist, welche die Flanschbohrungen kreisförmig miteinander verbindet.

Bei bestehenden Stahltürmen ist jedoch eine nachträgliche Bearbeitung des Ringflansches nur mit hohem Aufwand möglich, so daß die nutartigen Entwässerungs- bzw. Belüftungsöffnungen günstiger im Bereich der Verbindungselemente angeordnet werden, da diese leicht ausgetauscht werden können.

In weiterer Ausgestaltung der Erfindung ist daher vorgesehen, daß spezielle Unterlegscheiben verwendet werden, die eine oder mehrere über den Umfang verteilte Nuten aufweisen, und zwar vorzugsweise drei mit einem Winkel von 120° versetzt angeordneten Radialnuten, wobei die Radialnuten dabei auf der oberen oder der unteren Anlagefläche der Unterlegscheiben vorgesehen sein können.

Für einen Serieneinsatz kann die Bearbeitung des Flansches in den Auflagebereichen der Schraubenbolzenköpfe oder der Muttern sinnvoller sein, wenn auch hierbei in Kauf genommen werden muß, daß an der Flanschunterseite im Bereich der dort verwendeten Unterlegscheiben noch Flüssigkeitsreste verbleiben können, die dann nicht in der Lage sind, abzufließen. In diesem Fall kann vorteilhaft damit entgegengewirkt werden, daß eine Unterlegscheibe verwendet wird, die zur Auflagefläche des Schraubenkopfes hin mit Nuten versehen ist.

Weitere Einzelheiten und Vorteile der Erfindung werden nachfolgend durch Ausführungsbeispiele anhand der beigefügten Zeichnung näher erläutert und beschrieben; darin zeigt
- Figur 1: einen allgemeinen Ausschnitt aus einem Flanschsystem mit einer Schraubenbolzenverbindung,
- Figur 2: einen Ausschnitt von einem Ringflansch in Draufsicht mit konzentrisch angeordneten Flanschbohrungen, von denen radial zum Flanschrand Nuten zum Entlüften bzw. Entwässern verlaufen,
- Figur 3: einen Schnitt gemäß der Linie III - III,
- Figur 4: einen Ausschnitt von einem Ringflansch in Draufsicht mit konzentrisch angeordneten Flanschbohrungen, welche jeweils zum Entlüften bzw. Entwässern mit einer Nut als Ringnut kreisförmig miteinander verbunden sind,
- Figur 5: einen Schnitt gemäß der Linie V - V,
- Figur 6: eine erste Unterlegscheibe mit Entlüftungs- bzw. Entwässerungsnuten, und zwar
a) eine Sicht auf deren nutfreie Unterseite,
b) im Schnitt,
c) eine Sicht auf deren genuteten Oberseite,
d) eine Einzelheit gemäß den Pfeilen A - B in c) und
- Figur 7: eine zweite Unterlegscheibe mit Entlüftungs- bzw. Entwässerungsnuten, und zwar
a) eine Sicht auf deren genuteten Unterseite,
b) im Schnitt
c) eine Sicht auf deren nutfreie Oberseite,
d) eine Einzelheit gemäß den Pfeilen A - B in c).

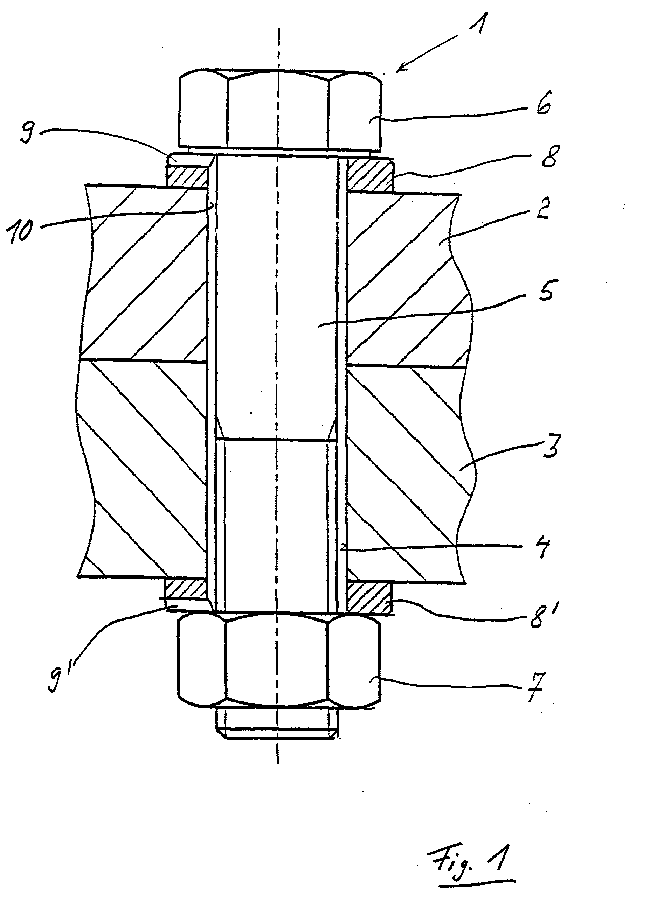

In Fig. 1 ist allgemein eine Ausführungsform des erfindungsgemäßen Flanschsystems mit einer Schraubenbolzenverbindung 1 in einem Ausschnitt gezeigt, und zwar mit zwei Flanschen 2 und 3, durch die eine gemeinsame Flanschbohrung 4 gebohrt ist, in welche ein Schraubenbolzen 5 mit einem Schraubenbolzenkopf 6 gesteckt ist, auf dem sich eine aufgeschraubte Mutter 7 befindet.

Zwischen dem Flansch 2 und dem Schraubenbolzenkopf 6 ist in Fig. 1 eine Unterlegscheibe 8 im Schnitt dargestellt, die drei über den Umfang verteilte radiale Nuten 9 aufweist, von denen jedoch bei dieser Darstellung nur eine zu sehen ist.

Zwischen dem Flansch 3 und der Mutter 7 des Schraubenbolzens 5 ist ebenfalls eine Unterlegscheibe 8 ' vorgesehen, die der Ausführung der Unterlegscheibe 8 entspricht, jedoch spiegelbildlich zu dieser angeordnet ist.

Wie aus der Darstellung in Fig. 1 ferner ersichtlich ist, wird durch die Radialnuten 9 bzw. 9 ' der Unterlegscheiben 8 bzw. 8' vorteilhaft erreicht, daß im montierten Zustand der Schraubenbolzenverbindung 1 ein Luft- oder Flüssigkeitsaustausch zwischen dem Außenrand der Unterlegscheiben 8 bzw. 8' und dem Innenbereich (Ringraum 10) der Flanschbohrung 4 erfolgen kann.

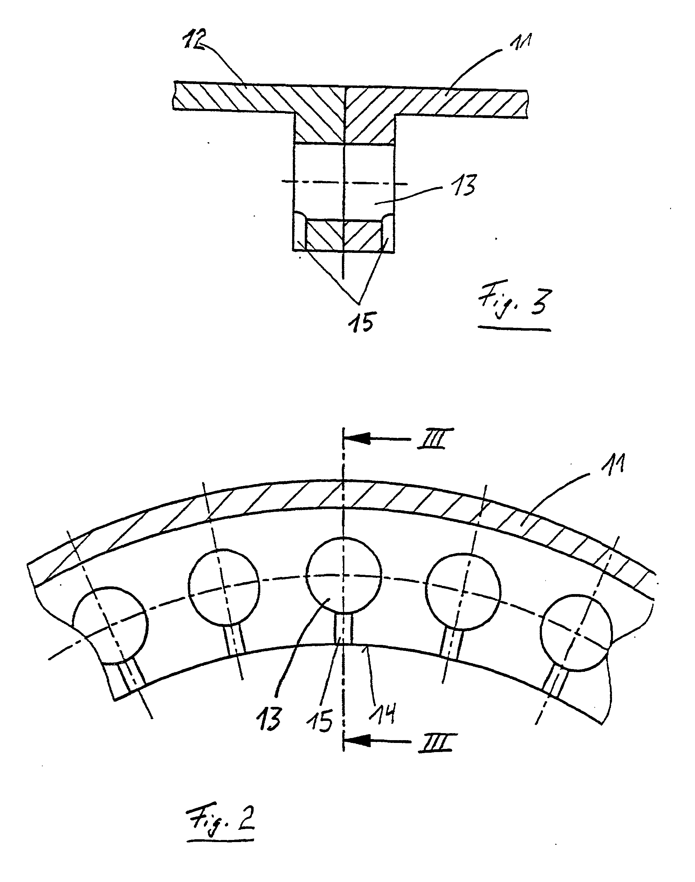

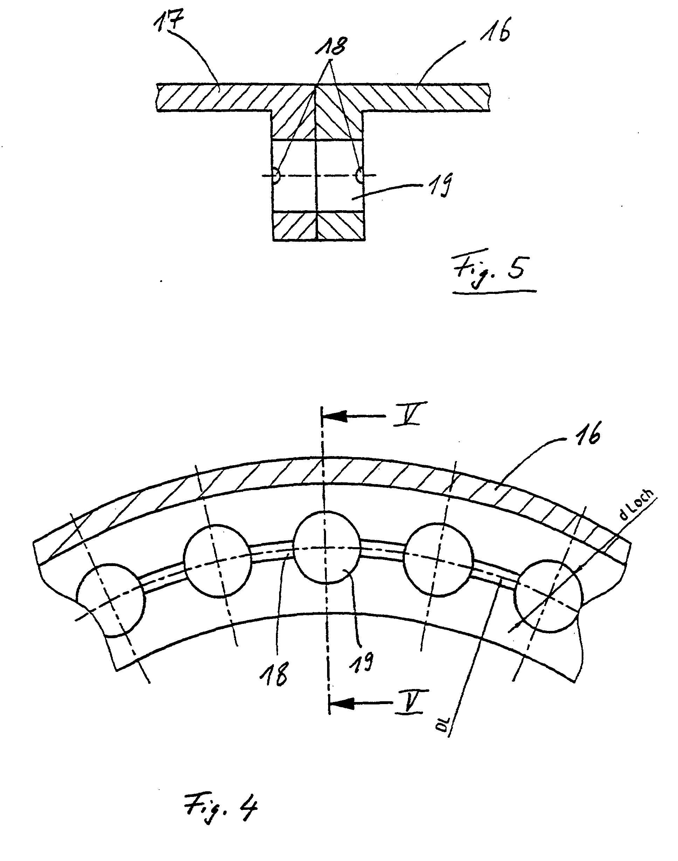

In Fig. 2 ist ein Ausschnitt von einem Ringflansch 11 (12) eines Stahlturmes gezeigt, der eine Vielzahl von konzentrisch angeordneten Flanschbohrungen 13 aufweist, von denen radial zum Flanschinnenrand 14 Nuten 15 verlaufen. Diese Ausführung ist sowohl an der oberen Flanschstirnfläche des Flansches 11 als auch an der unteren Flanschstirnfläche des Flansches 12 vorgesehen, wie aus Fig. 3 ersichtlich. Damit wird eine Belüftung und eine Entwässerung der Flanschbohrungen 13 ermöglicht, in denen die Schraubenbolzen 5 montiert sind (in Fig. 2 ist der Ringflansch ohne Schraubenbolzen dargestellt).

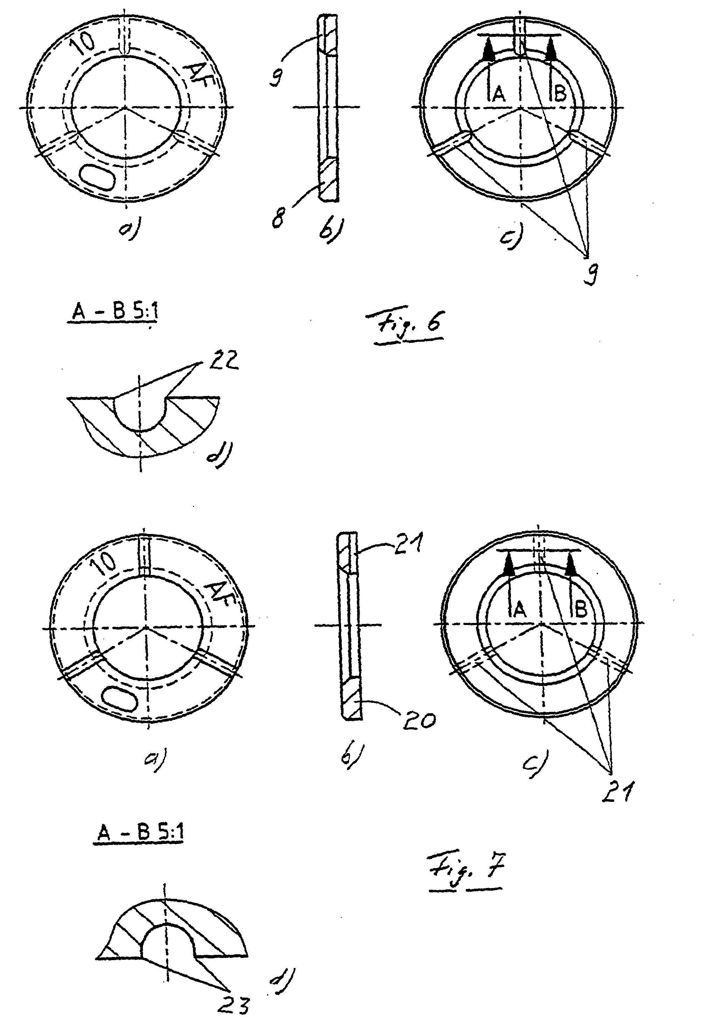

Eine zweite Lösung ist in Fig. 4 und 5 gezeigt, wo unmittelbar in der Flanschstirnfläche eines Ringflansches 16 bzw. 17 Vorkehrungen für eine Belüftung und eine Entwässerung in der Form von Nuten 18 vorgesehen sind, die als Ringnut kreisförmig miteinander verbunden sind. Eine derartige Ringnut stellt fertigungstechnisch eine einfachere Lösung dar als die Radialnuten 15 gemäß Fig. 2.

Bei der Ausführungsform gemäß Fig. 4 und 5 wird etwa im Bereich des mit D_{L} bezeichneten Lochkreisdurchmessers die Ringnut 18 bzw. 18 ' in die Flanschstirnfläche des Flanschs 16 bzw. 17 eingebracht, so daß die Flanschbohrungen 19 von der Ringnut 18 bzw. 18 ' überstrichen werden , wodurch eine Entwässerung und Belüftung der Flanschbohrungen 19 mit den nicht dargestellten montierten Schraubenbolzenverbindungen 1 ermöglicht wird.

Wenn man den lichten Durchmesser einer Flanschbohrung 19 mit d_{Loch} bezeichnet, dann muß die Ringnut 18 bzw. 18 ' etwa im Bereich zwischen D_{L} minus d_{Loch} /2 und D_{L} plus d_{Loch} /2 in die Flanschstirnfläche des Ringflanschs 16 bzw. 17 eingebracht werden.

Die in Fig. 6 a) bis d) in drei Ansichten und mit einer Einzelheit dargestellte Unterlegscheibe 8 mit Nuten 9 ist bereits in Fig. 1 bei der dortigen Schraubenbolzenverbindung 1 im montierten Zustand zu sehen. Insbesondere in Fig. 6 c) sind die drei über den Umfang der Unterlegscheibe 8 verteilten radialen Nuten 9 gut zu sehen, welche jeweils gemäß der Einzelheit 6 d) bei 22 einen Kantenbruch aufweisen. Hierbei sind die Nuten 9 mit einem Winkel von 120° versetzt angeordnet.

Die in Fig. 6 dargestellte Unterlegscheibe 8 besitzt die Radialnuten 9 auf ihrer im eingebauten Zustand dem Schraubenbolzenkopf 6 bzw. der Mutter 7 des Schraubenbolzens 5 zugewandten Anlagefläche, wogegen bei einer zweiten Ausführungsform einer Unterlegscheibe 20 mit Nuten 21 gemäß Fig. 7 a) bis d) die Nuten 21 auf der gegenüberliegenden Seite vorgesehen sind. Mit anderen Worten, die bei der Unterlegscheibe 20 ebenfalls über den Umfang verteilten drei Ringnuten 21 befinden sich auf der im eingebauten Zustand der jeweiligen Flanschstirnfäche zugewandten Anlagefläche. Auch bei der Unterlegscheibe 20 sind die jeweils mit einem Winkel von 120° versetzt angeordneten Radialnuten 21 im Bereich ihrer mit 23 bezeichneten Kanten leicht gebrochen, wie es in Fig. 7 d) angedeutet ist.

Ganz allgemein kann die Zahl der in die Unterlegscheiben eingebrachten Nuten auch varüeren, d. h es können auch beispielsweise zwei oder vier auf den Umfang verteile Nuten vorgesehen werden. Dies ist auch abhängig von der Größe des Objekts, das mit den erfindungsgemäßen Maßnahmen zuverlässig ohne großen Aufwand gegen Korrosion geschützt werden soll.

## Patentansprüche

1. Flanschsystem mit mindestens zwei Flanschen (2, 3), welche über mindestens eine Flanschbohrung (4) mittels einer Schraubenbolzenverbindung (1) miteinander verbunden sind, die gegebenenfalls unter Zwischenschaltung von Unterlegscheiben (8, 20) durch einen mit einer Mutter verschraubbaren Schraubenbolzen (5) gebildet ist, **dadurch gekennzeichnet, daß** die dem Schraubenbolzenkopf (6) und/oder der Mutter (7) des Schraubenbolzens (6) zugewandte Flanschstirnfäche und/oder eine oder beide Stirnseiten der Unterlegscheiben (8; 20) mit mindestens einer zur Entlüftung oder Entwässerung der Flanschbohrung (4; 13; 19) dienenden Nut (9; 15; 18; 21) versehen ist.

2. Flanschsystem nach Anspruch 1, **dadurch gekennzeichnet, daß** die in der jeweiligen Flanschstirnfläche vorgesehene Nut (9) ausgehend von der Flanschbohrung (4) bis zum Flanschrand durchgehend verläuft.

3. Flanschsystem nach Anspruch 2 für einen ringförmigen Flansch (11) mit einer Mehrzahl konzentrisch auf diesem angeordneten Flanschbohrungen (13), **dadurch gekennzeichnet, daß** die Flanschbohrungen (13) mindestens eine Nut (15) aufweisen, die radial zum Flanschrand (14) verläuft.

4. Flanschsystem nach Anspruch 1 für einen ringförmigen Flansch (16) mit einer Mehrzahl konzentrisch auf diesem angeordneten Flanschbohrungen (19), **dadurch gekennzeichnet, daß** die in der jeweiligen Flanschstirnfläche vorgesehene Nut (18) als Ringnut ausgebildet ist, welche die Flanschbohrungen (19) vorzugsweise kreisförmig miteinander verbindet.

5. Flanschsystem nach Anspruch 1, **dadurch gekennzeichnet, daß** die Unterlegscheiben (8; 20) eine oder mehrere über den Umfang verteilte radiale Nuten (9; 21) aufweisen, vorzugsweise drei mit einem Winkel von 120 ° versetzt angeordnete Radialnuten.

6. Flanschsystem nach Anspruch 5, **dadurch gekennzeichnet, daß** die Radialnuten (9) der Unterlegscheiben (8) auf deren dem Schraubenbolzenkopf (6) bzw. der Mutter (7) des Schraubenbolzens zugewandten Anlageflächen vorgesehen sind.

7. Flanschsystem nach Anspruch 5, **dadurch gekennzeichnet, daß** die Radialnuten (21) der Unterlegscheiben (20) auf deren der Flanschstirnfläche zugewandten Anlageflächen vorgesehen sind.

## Claims

1. A flange system with at least two flanges (2, 3), which are connected together via at least one flange bore (4) by means of a bolt connection (1), which is constituted by a bolt (5), which may be screw connected to a nut, optionally with the interposition of washers (8; 20), **characterised in that** the flange end surface directed towards the bolt head (6) and/or the nut (7) of the bolt (6) and/or one or both end surfaces of the washers (8; 20) is provided with at least one groove (9; 15; 18; 21) serving to vent or drain the flange bore (4; 13; 19).

2. A flange system as claimed in Claim 1, **characterised in that** the groove (9) provided in each flange end surface starts from the flange bore (4) and extends continuously to the edge of the flange.

3. A flange system as claimed in Claim 2 for an annular flange (11) with a plurality of flange bores (13) arranged concentrically on it, **characterised in that** the flange bores (13) have at least one groove (15), which extends radially to the edge (14) of the flange.

4. A flange system as claimed in Claim 1 for an annular flange (16) with a plurality of flange bores (19) arranged concentrically on it, **characterised in that** the groove (18) provided in each flange end surface is constructed in the form of an annular groove, which connects the flange bores (19) together, preferably circularly.

5. A flange system as claimed in Claim 1, **characterised in that** the washers (8; 20) have one or more radial grooves (9; 21) distributed over their periphery, preferably three radial grooves arranged offset by an angle of 120°.

6. A flange system as claimed in Claim 5, **characterised in that** the radial grooves (9) in the washers (8) are provided on their engagement surfaces directed towards the bolt head (6) or the nut (7) of the bolt.

7. A flange system as claimed in Claim 5, **characterised in that** the radial grooves (21) in the washers (20) are provided on their engagement surfaces directed towards the flange end surface.

## Revendications

1. Système de joint à brides présentant au moins deux brides (2 ; 3), qui sont raccordées l'une à l'autre par l'intermédiaire d'au moins un alésage de joint à brides (4) et au moyen d'un assemblage à boulons filetés (1) , qui est formé par une tige filetée (5) que l'on peut visser avec un écrou, éventuellement en intercalant des rondelles (8 ; 20), **caractérisé en ce que** la surface frontale du joint à brides et/ou une ou les deux faces frontales des rondelles (8 ; 20), orientées vers la tête de boulon fileté (6) et/ou vers l'écrou 7 du boulon fileté (5), comprennent au moins une rainure (9 ; 15 ; 18 ; 21) servant à évacuer l'air ou l'eau de l'alésage du joint à brides (4 ; 13 ; 19).

2. Système de joint à brides selon la revendication 1, **caractérisé en ce que** la rainure (9) prévue dans la surface frontale du joint à brides s'étend, de manière continue, de l'alésage du joint à brides (4) jusqu'au bord du joint à brides.

3. Système de joint à brides selon la revendication 2 pour un joint à brides annulaire (11) présentant une pluralité d'alésages du joint à brides (13) disposés de manière concentrique, **caractérisé en ce que** les alésages du joint à brides (13) présentent au moins une rainure (15) qui s'étend, de manière radiale, jusqu'au bord du joint à brides (14).

4. Système de joint à brides selon la revendication 1 pour un joint à brides annulaire (16) présentant une pluralité d'alésages du joint à brides (19) disposés de manière concentrique, **caractérisé en ce que** la rainure (18) prévue dans la surface frontale du joint à brides est une rainure annulaire qui relie, de préférence de manière circulaire, les alésages du joint à brides (19) les uns aux autres.

5. Système de joint à brides selon la revendication 1, **caractérisé en ce que** les rondelles (8 ; 20) présentent une ou plusieurs rainures radiales (9 ; 21) qui sont réparties sur la circonférence, de préférence trois rainures radiales qui sont disposées de manière espacée selon un angle de 120°.

6. Système de joint à brides selon la revendication 5, **caractérisé en ce que** les rondelles (8) présentent les rainures radiales (9) sur leurs surfaces d'appui orientées vers la tête du boulon fileté (6) ou vers l'écrou (7) du boulon fileté.

7. Système de joint à brides selon la revendication 5, **caractérisé en ce que** les rondelles (20) présentent les rainures radiales (21) sur leurs surfaces d'appui orientées vers la surface frontale du joint à brides.
